Europäisches Patentamt

European Patent Office

Office européen des brevets

(11) Publication number: 0 398 301
A2

## (12) EUROPEAN PATENT APPLICATION

(21) Application number: 90109262.7

(22) Date of filing: 16.05.90

(51) Int. Cl.5: G06K 19/04, G06K 19/077, G06K 7/08

(30) Priority: 19.05.89 JP 126463/89

(43) Date of publication of application:
22.11.90 Bulletin 90/47

(84) Designated Contracting States:
CH DE IT LI

(71) Applicant: STAR MICRONICS CO., LTD.
194, Nakayoshida
Shizuoka-shi Shizuoka(JP)

(72) Inventor: Yagi, Toshio
c/o Star Micronics Co.,Ltd., of 194
Nakayoshida
Shizuoka-shi, Shizuoka(JP)
Inventor: Masuda, Hisashi
c/o Star Micronics Co.,Ltd., of 194
Nakayoshida
Shizuoka-shi, Shizuoka(JP)
Inventor: Mochizuki , Kenji, c/o Star Sys.
Devel. Co., Ltd
of 264-1 Nakayoshida
Shizuoka-shi, Shizuoka(JP)

(74) Representative: Tiedtke, Harro, Dipl.-Ing. et al
Patentanwaltsbüro Tiedtke-Bühling-Kinne-
Grupe-Pellmann-Grams-Struif Bavariaring 4
Postfach 20 24 03
D-8000 München 2(DE)

(54) Data carrier apparatus and method of manufacturing the same.

(57) A data carrier apparatus for transmitting and receiving data from and to a fixed scanner in a non-contacting state and a method of manufacturing the same. The data carrier, which is composed of flexible substrate of a plastic thin film with data transmitting/receiving elements mounted thereon, is mounted in a small space by utilizing the existing space of a moving holder such as the inner surface of a spool for yarn. By forming the data carrier and the cylindrical body into one piece by pouring resin, the functional stability of the elements is greatly enhanced.

FIG. 1

# DATA CARRIER APPARATUS AND METHOD OF MANUFACTURING THE SAME

## BACKGROUND OF THE INVENTION

### Field of the Invention

The present invention relates to a semiconductor data carrier apparatus composed of a data carrier including a semiconductor memory medium which is mounted on a holder so as to read/write data information, and a method of manufacturing the same.

### Description of the Related Art

A semiconductor data carrier system equipment has recently attracted attention as a data storing means for storing data information into the semiconductor memory medium of a data carrier by a scanner device and collecting the stored data information by the scanner means so as to be processed by a computer.

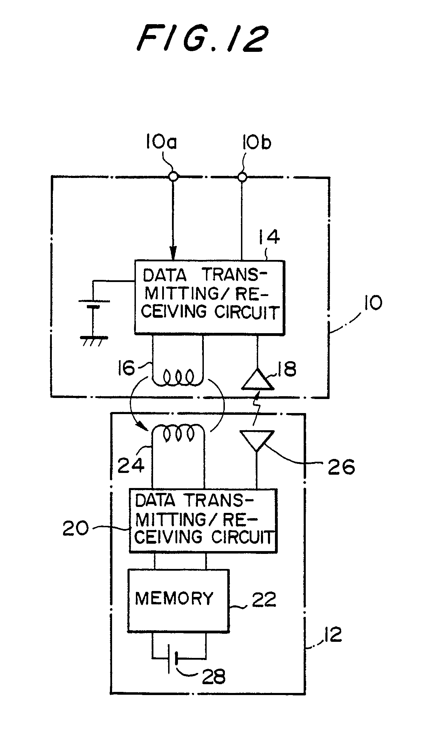

Fig. 12 schematically shows a conventional semiconductor data carrier system. This system includes a scanner device 10 on the fixed side and a data carrier 12 on the movable side. The data carrier 12 is held by a desired holder. For example, when this system is used for control of personnel, each person as a holder holds the data carrier 12 in the form of a card or a badge, and the data is supplied and received when he approaches the scanner device 10 installed at the entrance or the exit in a specified area. Another example of a holder is a part to be assembled or a part carriage in the management of a manufacturing process. The data carrier 12 is provided on each part or part carriage and the data is supplied and received between the part or the part carriage and the scanner device 10 installed at a gate portion of each manufacturing station.

The scanner device 10 includes a data transmitting/receiving circuit 14 and transmits the data supplied from an input terminal 10a to the data carrier 12 as a high-frequency electromagnetic signal through a data transmission coil 16.

The data sent back from the data carrier 12 is received by a receiving antenna 18 in the form of a feeble wave detected in radio-wave propagation, as will be described later, and is output from an output terminal 10b of the data transmitting/receiving circuit 14.

The data carrier 12 includes a data transmitting/receiving circuit 20 and a memory 22. The data transmitted from the transmission coil 16 of the scanner device 10 is received by a reception coil 24 by utilizing high-frequency electromagnetic coupling, and stored in the memory 22.

The data transmitting/receiving circuit 20 transmits the content of the memory, if necessary, from a transmitting antenna 26 to the receiving antenna 18 of the scanner device 10 by radio-wave propagation, thereby enabling the content of the data stored in the data carrier 12 to be read out as desired.

The memory 22 is usually composed of a semiconductor memory and incorporates an IC integrally with the data transmitting/receiving circuit 20.

In order to retain the content of the memory 22, the memory 22 preferably has a minute battery 28, but in the case of a semiconductor memory device which is dispensed with a backup source such as an EEPROM, the battery 28 may be eliminated.

In this way, in the semiconductor data carrier system, data is transmitted from the scanner device 10 to the data carrier 12 at a sufficient output by electromagnetic coupling, and the content of the memory in the data carrier 12 is read out by the scanner device 10 by the radio-wave propagation with the use of the transmitting antenna 26.

It is therefore possible to make the data carrier 12 provided on a holder in accordance with the purpose of use small and have a long life without the necessity for providing for itself with any driving source.

According to the above-described conventional apparatus, it is possible to provide a data carrier within various types of holders. The reception coil, the transmitting antenna and the IC which constitute the data carrier are required to be accommodated in the smallest space possible within a holder.

When a data carrier is adopted in a manufacturing process, it is desirable that the data carrier passes the scanner device disposed on the side passage of each manufacturing station in the closest possible proximity to each other.

However, a conventional data carrier suffers from a problem that since it is in the form of a flat card, it cannot be applied to all types of holders at it is.

Especially, in many manufacturing processes, a rod-like holder which passes the vicinity of the scanner device is used as a holder, and it is difficult to produce a data carrier suitable to such a holder in the prior art.

An example of such a holder is a spool in a spinning mill, wherein it is necessary to set a spool with yarn of desired count, color and material wound therearound on a desired stand as occasion demands. In an unmanned spinning mill, the control of the movement of such a spool is very important. A data carrier in accordance with the present invention is very suitable to be provided at the end of the spool.

As well known, such a spool has a long and narrow cylindrical shape. In order to ensure the establishment of electromagnetic or radio-wave coupling between the spool and the scanner device, it is necessary to accommodate the data carrier in such a long and narrow cylindrical holder at the right position.

## SUMMARY OF THE INVENTION

Accordingly, it is an object of the present invention to provide a data carrier apparatus which meets the above-described requirements.

To achieve this aim, the present invention provides a data carrier apparatus provided in a moving holder so as to transmit and receive data to and from a scanner disposed at a predetermined position in a non-contacting state by electromagnetic and radio-wave coupling, the apparatus comprising: a reception coil provided on the holder coaxially therewith; a transmitting antenna provided in the holder; and an IC provided between a receiving coil and a transmitting antenna in close contact with the holder.

The present invention also provides a method of manufacturing a data carrier apparatus comprising the steps of: attaching a data carrier composed of a plurality of data transmitting/receiving elements mounted on a flexible substrate to the outer surface of an inner hollow cylinder; inserting the inner hollow cylinder into an outer hollow cylinder such that a predetermined space is formed between the inner surface of the outer hollow cylinder and the outer surface of the inner cylinder and fixing the peripheral surface of the bottom portion of the inner cylinder to the inner surface of the outer cylinder in close contact therewith; pouring a molten resin into the inner hollow cylinder; accommodating the outer hollow cylinder as a whole in a vacuum container after the pouring of the molten resin; sucking and removing the air in the inner hollow cylinder within the vacuum container so that the interior of the inner hollow cylinder has a negative pressure and introducing the resin in the inner hollow cylinder to the space between the inner surface of the outer hollow cylinder and the outer surface of the inner hollow cylinder through a pouring hole provided on the side surface of the inner hollow cylinder so as to fill the space with the resin; and subjecting the thus-obtained product to a predetermined shaping process after the resin has solidified.

According to the apparatus of the present invention, since the substrate on which the data transmitting/receiving element has flexibility, it is possible to attach a data carrier to a small space by effectively utilizing the inner surface of an outer hollow cylinder such as a spool for yarn. If the data carrier is disposed at the end portion of the outer hollow cylinder, it is possible to effectively enhance the degree of electromagnetic coupling with a scanner device, thereby facilitating the transmission and reception between the data carrier and the scanner device.

According to the method of the present invention, since an outer hollow cylinder and a data carrier inserted therein are formed into one piece by pouring a resin, it is possible to enhance the stability of the elements mounted on the data carrier.

The above and other objects, features and advantages of the present invention will become clear from the following description of the preferred embodiments thereof, taken in conjunction with the accompanying drawings.

## BRIEF DESCRIPTION OF THE DRAWINGS

Fig. 1 shows the structure of a first embodiment of a data carrier apparatus according to the present invention;

Fig. 2 is a partially enlarged view of the embodiment shown in Fig. 1;

Fig. 3 shows the structure of a data carrier in accordance with the present invention;

Fig. 4 is a sectional view of the embodiment shown in Fig. 2;

Fig. 5 shows the structure of a second embodiment of a data carrier apparatus according to the present invention;

Fig. 6 is a partially enlarged view of the embodiment shown in Fig. 5;

Fig. 7 is an explanatory view of a data carrier used in the second embodiment;

Fig. 8 is a sectional view of the embodiment shown in Fig. 6;

Fig. 9 is an explanatory view of a method of forming a data carrier mounting portion from a resin;

Fig. 10 is an explanatory view of another method of stabilizing an element in the present invention;

Fig. 11 shows the structure in which a data carrier and a spool are integrally formed in accordance with the present invention; and

Fig. 12 is a block diagram of a general structure of a conventional apparatus.

## DESCRIPTION OF THE PREFERRED EMBODIMENTS

Embodiments of the present invention will be explained hereinunder with reference to the accompanying drawings.

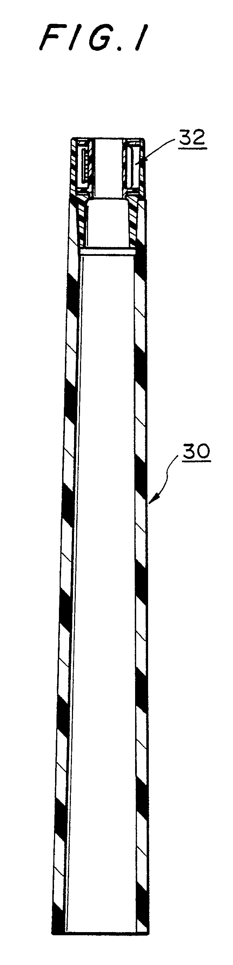

Fig. 1 shows the structure of a first embodiment of a data carrier apparatus according to the present invention.

A spool 30 used in a spinning mill or the like for winding yarn therearound has a hollow shape. The spool 30 functions as a cylindrical holder in this embodiment.

A multiplicity of spools 30 are continuously carried on a predetermined passage such as a belt conveyor to a predetermined spinning position, wherein each of the spools 30 is set on a stand and rotated on it own axis while yarn is wound therearound.

There is recently a strong tendency to unmanned spinning mills with the intention of reduction in energy and cost. Therefore, the control of the movements of a multiplicity of spools which are fed to predetermined spinning positions in correspondence with many kinds of yarns and the control of the movements of the spools so as to collect them in accordance with the type before yarns are wound therearound are very important for enhancing the working efficiently and maintaining a high product quality.

As an automatic control means for the spool carrying operation in an unmanned spinning mill, a system for carrying a spool to a predetermined position by transmitting and receiving data between each of the scanners fixed at a plurality of predetermined positions in a mill and a data carrier attached to a spool to be carried in a non-contacting state by electromagnetic coupling, radio-wave coupling, etc. has been expected and strongly required to be put to practical use.

In order to ensure the transmission and reception of data between the scanner and the data carrier by adopting such non-contacting type scanner and data carrier means, it is naturally necessary that the data carrier should pass the closest proximity to the scanner, as described above.

Since a multiplicity of spools are usually moved in parallel to each other, it is necessary to provide a data carrier at the end portion of the spool in order to transmit and receive data by electromagnetic coupling in a non-contacting state.

Conventionally, however, it is very difficult to insert a data carrier in the interior of a hollow spool in such a manner as to enable the transmission and reception of data with the scanner, and no structure which can be applied to the actual manufacturing process as it is has been realized yet.

The present invention is characterized in that the structure of a data carrier, which is generally of a flat card type, is improved so as to fit to the inner shape of the spool.

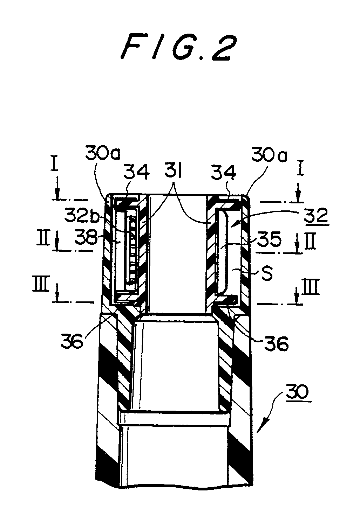

In Fig. 1, a data carrier 32 is inserted into the spool; 30 at the end portion thereof. This part is enlarged in Fig. 2.

To the upper end portion of the spool 30, an outer cylinder portion 30a is press fitted or fixed by an adhesive. On the inside of the outer cylinder portion 30a, a square pillar-shaped inner cylinder body 31 is provided with a space S formed between each side surface of the inner cylinder body 31 and the inner surface of the outer cylinder portion 30a. The data carrier 32 in accordance with the present invention is mounted on the side surfaces of the inner cylinder body 31 by utilizing the space S.

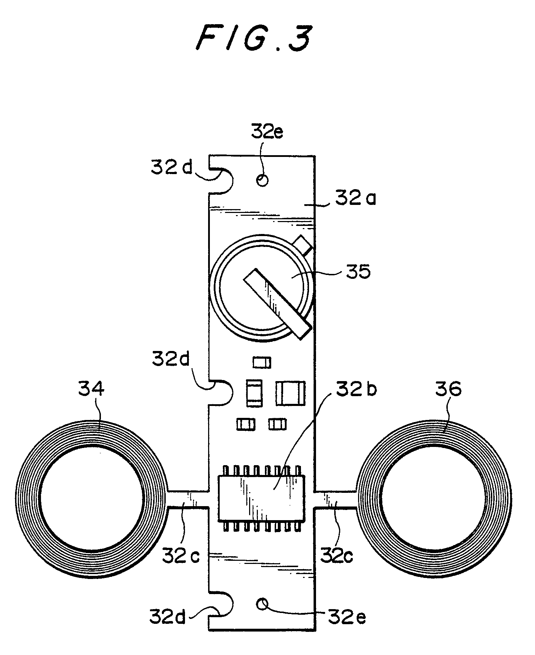

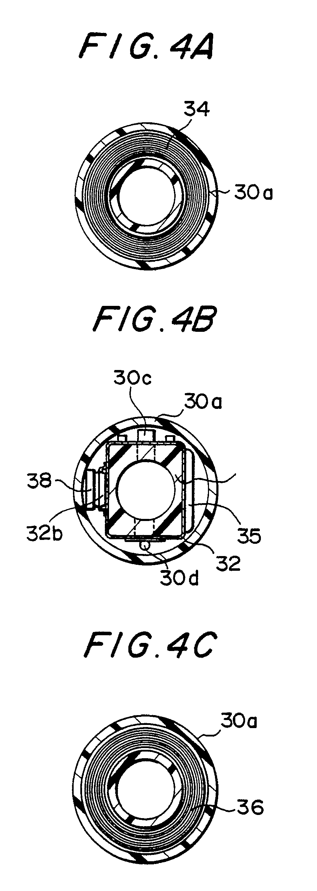

Fig. 3 shows the structure of the data carrier 32 in a spread state, and Figs. 4(A), 4(B) and 4(C) are sectional views of the embodiment shown in Fig. 2, taken along the lines I - I, II - II, III - III, respectively.

The data carrier 32 in accordance with the present invention is composed of an IC 32, a reception coil 34, a transmitting antenna 36 and a battery 35 which are mounted on a flexible substrate 32a made of polyimide film or the like. The data carrier 32 with the flexible substrate 32a folded is mounted on the inner cylinder body 31b, as shown in Fig. 2.

More specifically, after the rectangular portion of the flexible substrate 32a is wound around the square pillar-shaped inner cylinder body 31, the reception coil 34 and the transmitting antenna 36 are folded at the respective connecting portions 32c. In this way, the data carrier 32 is situated within the spool 30 in the vicinity of the upper end portion thereof coaxially with the spool 30, as shown in Fig. 2.

In order to ensure the firm fixation of the inner cylinder body 31 to the flexible substrate 32a, the flexible substrate 32 is provided with notches 32d which engage claw portions 3°C provided on the side surfaces of the inner cylinder body 31, and holes 32e which engage with projections 30d provided on the side surfaces of the inner cylinder body 31. These notches 32d and holes 32e facilitate the mounting and fixture of the data carrier 31 on the inner cylinder body 31 as if by pinning.

For the flexible substrate 32a of the data carrier 32, a very thin polyimide film is used, as described above.

Therefore, a wide space is left in the space S between the inner cylinder body 31 and the outer cylinder portion 30a after the IC 32 is accommodated. It is easy to dispose the small backup battery 35 in this remaining space if the built-in memory of the IC 32 is volatile.

According to this embodiment having the above-described structure, it is possible to provide the data carrier 32, the battery 35 and other parts in the inner space of the spool 30 in such a manner as to allow eah of the members stable function without almost any change in the outer configuration itself. In this way, secure transmission and reception of data is realized between the data carrier and the scanner with a simple structure, thereby enabling a very efficient control of the movement of the spool.

In this embodiment, a counterweight 38 is fixed in the space S between the inner cylinder body 31 and the outer cylinder portion 30a. The counterweight 38 serves to effectively suppress the positional deviation of the data carrier 32 and harmful vibration which are apt to be caused when the spool 30 is set on the stand and begins to rotate in a spinning mill, and to maintain the normal function of the data carrier 32.

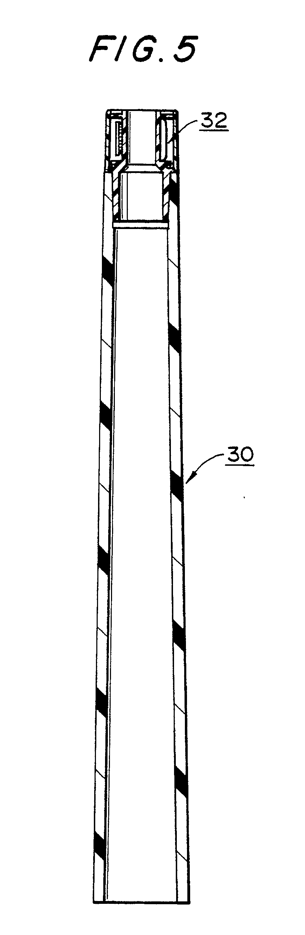

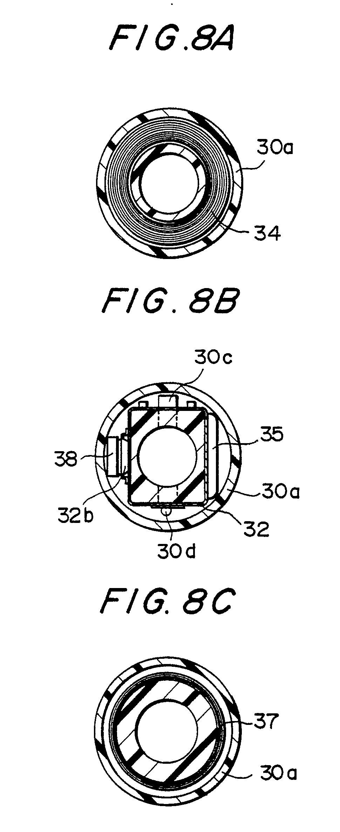

A second embodiment of the apparatus according to the present invention will now be explained with reference to Figs. 5 to 8.

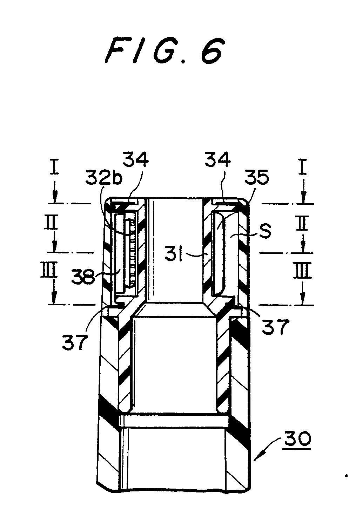

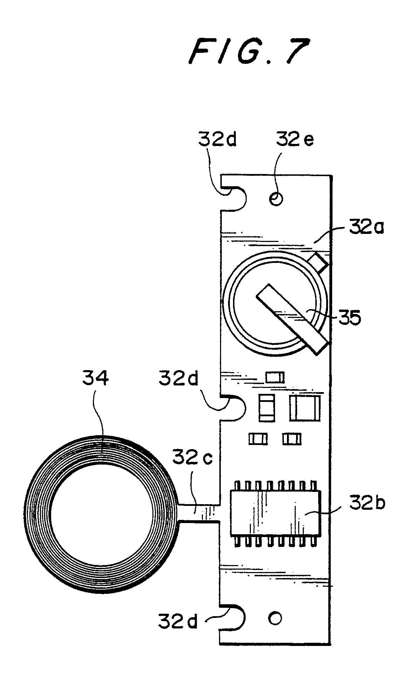

Fig. 5 shows the entire structure of a spool with a data carrier in accordance with the present invention mounted thereon, Fig. 6 is an enlarged view of the data carrier mounting portion and Fig. 7 is a plan view of the data carrier in a spread state.

This embodiment is characterized in that a transmitting antenna 37 is directly wound around the lower periphery of the inner cylinder body 31 instead of being integrally mounted on the flexible substrate 32a. The fundamental structure and the substantial operation of the embodiment are the same as in the first embodiment. It is also possible to mount a flat coil as the reception coil without integrally mounting it on the flexible substrate 32a.

A method of integrally forming a data carrier mounting portion of the spool 30 from a resin will now be explained.

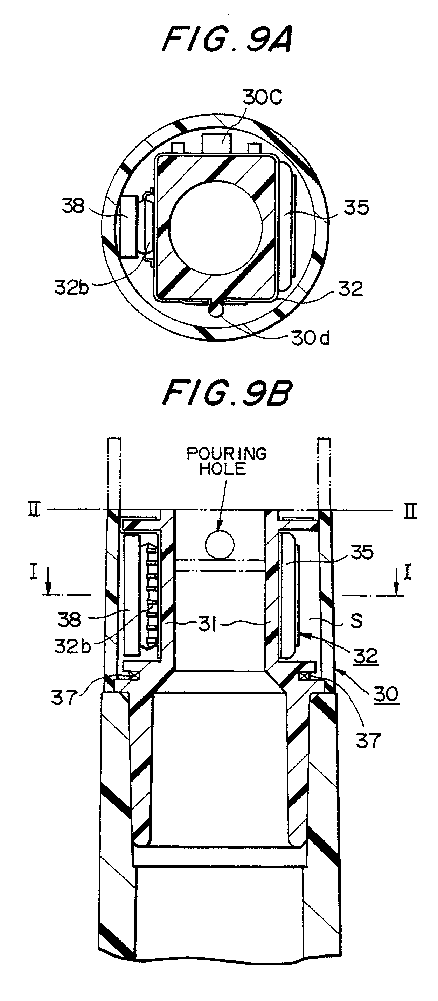

Fig. 9(A) is a sectional view of the data carrier mounting portion shown in Fig. 9(B), taken along the line I - I.

As described above, according to an apparatus and a method of the present invention, the outer hollow cylinder 30a and the data carrier 32 inserted therein are formed into one piece by pouring a resin into the space S between the outer cylinder portion 30a and the inner cylinder body 31 in which the data carrier 32 is accommodated. In this way, it is possible to enhance the stability of the elements constituting the data carrier 32a, namely, the flexible substrate 32a, the reception coil 34 and the transmitting antenna 36.

An epoxy resin, which is a resin material being charged, is poured from the open upper end of the spool 30 at the height indicated by the chain line. Since the directly under portion of the open end is closed by the inner cylinder body 31, as shown in Fig. 9, the poured epoxy resin does not drop from the upper surface of the inner cylinder body 31.

A pouring hole is provided on the side surface of the inner cylinder body 31, as shown in Fig. 9-(B).

After charging the epoxy resin, the inner cylinder body 31 together with the spool 30 is accommodated in a vacuum container. The air existing in the interior of the spool 30 is gradually sucked and removed from below the spool 30.

As a result, the charged epoxy resin is introduced to the space S from the pouring hole provided on the surface of the inner cylinder body 31 by a negative pressure produced by the air sucking operation. With the elapse of time, the space S is filled with the epoxy resin and, as a result, the periphery of the data carrier mounting portion and the upper surface of the inner cylinder body 31 are integrally formed from the epoxy resin.

After the resin has solidified, the spool 30 is cut along the line II - II so as to align the upper end surface of the spool 30 and the upper end surface of the inner cylinder body 31 at the same level, and a shaping process including the step of making a hole at the central portion is carried out.

In this way, it is possible to stabilize the characteristics of the elements of the data carrier 32, thereby enabling secure transmission and reception of data with the scanner.

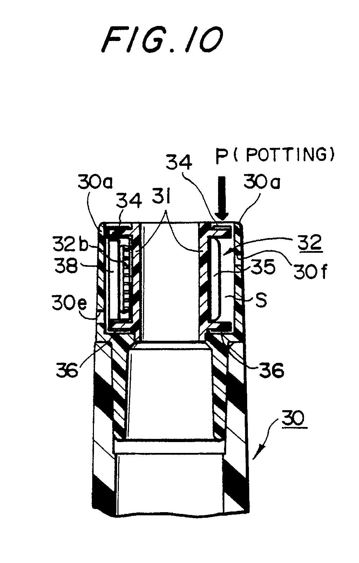

Another method of stabilizing the elements is shown in Fig. 10. In Fig. 10, a resin pouring hole 30e and an air vent 30f are provided on the outer cylinder portion 30a, and a resin is poured to the space S. The upper end surface of the spool 30 is fixed by potting P.

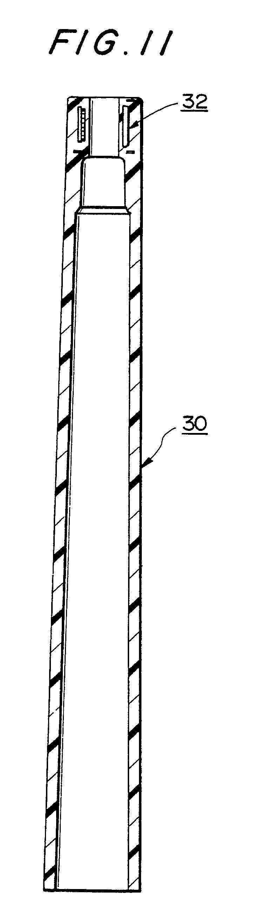

A method of forming the data carrier 30 and the spool 30 into one piece by insert molding as shown in Fig. 11 may also be adopted.

In the above-described embodiments, a cylindrical spool is adopted as a holder, but the present invention is not restricted thereto and a polygonal cylinder or a pillar may be adopted instead.

It is also possible to utilize various caps and screw heads as a holder. The data carrier must not always be accommodated in one end portion of a holder but it may occupy the most part of the holder..

The data carrier may be mounted on an intermediate portion, for example, of a holder as well as the end portion.

As described above, according to the apparatus of the present invention, it is possible to easily mount a data carrier composed of a data transmitting/receiving device which is mounted on a flexible substrate on a moving holder such as a spool for yarn by effectively utilizing the inner space while retaining a high data transmission and reception efficiency.

According to the method of the present invention, it is possible to greatly enhance the functional stability of the elements in the data carrier apparatus by adopting a method of integrally forming the apparatus by using a resin.

While there has been described what are at present considered to be preferred embodiments of the invention, it will be understood that various modifications may be made thereto, and it is intended that the appended claims cover all such modifications as fall within the true spirit and scope of the invention.

A data carrier apparatus for transmitting and receiving data from and to a fixed scanner in a non-contacting state and a method of manufacturing the same. The data carrier, which is composed of flexible substrate of a plastic thin film with data transmitting/receiving elements mounted thereon, is mounted in a small space by utilizing the existing space of a moving holder such as the inner surface of a spool for yarn. By forming the data carrier and the cylindrical body into one piece by pouring resin, the functional stability of the elements is greatly enhanced.

## Claims

1. A data carrier apparatus provided in a moving holder so as to transmit and receive data to and from a scanner disposed at a predetermined position in a non-contacting state by electromagnetic and radio-wave coupling, said apparatus comprising: ·
a reception coil provided on said holder coaxially therewith;
a transmitting antenna provided in said holder; and
an IC provided between a receiving coil and a transmitting antenna in close contact with said holder.

2. A data carrier apparatus according to Claim 1, wherein said transmitting antenna is disposed in said holder coaxially therewith.

3. A data carrier apparatus according to Claim 1, wherein said holder is composed of an outer hollow cylinder body in which a flexible substrate with a data carrier composed of a plurality of data receiving and transmitting elements mounted thereon is inserted in a folded state.

4. A data carrier apparatus according to Claim 3, wherein said outer hollow cylinder body is a spool for yarn.

5. A data carrier apparatus according to Claim 3, wherein an inner hollow cylinder body is inserted into said outer hollow cylinder body coaxially therewith in such a manner as to form a predetermined space between the inner surface of said outer hollow cylinder body and the outer surface of said inner hollow cylinder body and said data carrier is attached to the outer surface of said inner hollow cylinder body.

6. A data carrier apparatus according to Claim 3, wherein said data transmitting/receiving elements mounted on said flexible substrate include said reception coil and said transmitting antenna respectively provided in contact with the upper and lower open ends of said inner hollow cylinder body concentrically with said inner hollow cylinder body, and a data processing portion disposed on the outer side surface of said inner hollow cylinder body.

7. A data carrier apparatus according to Claim 3, wherein said inner hollow cylinder body is provided at the outer surface thereof with a claw portion and a projection, and said flexible substrate of said data carrier is provided with a notch and a hole, whereby said claw portion and said projection are engaged with said notch and said hole, respectively, in the state in which said data carrier is attached to said inner hollow cylinder body, thereby fixing said data carrier to said inner hollow cylinder body.

8. A data carrier apparatus according to Claim 3, wherein said flexible substrate is composed of a polyimide film or a polyester film.

9. A data carrier apparatus according to Claim 6, wherein a backup source for said data processing portion is mounted on said flexible substrate.

10. A data carrier apparatus according to Claim 4, wherein a counterweight for preventing the vibration of said data carrier during the rotation of said inner hollow cylinder body is provided in said space formed between the inner surface of said outer hollow cylinder body and the outer surface of said inner hollow cylinder body.

11. A data carrier apparatus according to Claim 5, wherein said inner hollow cylinder body is disposed in the vicinity of the open end at the top of said hollow outer hollow cylinder body.

12. A data carrier apparatus according to Claim 6, wherein said transmitting antenna is directly wound around the lower end portion of the outer surface of said inner hollow cylinder body.

13. A data carrier apparatus according to Claim 5, wherein a resin is poured into said space formed between the inner surface of said outer hollow cylinder body and the outer surface of said inner hollow cylinder body so as to fill said space with said resin and form said outer hollow cylinder body, said inner hollow cylinder body and said data carrier into one piece.

14. A method of manufacturing a data carrier apparatus comprising the steps of:
attaching a data carrier composed of a plurality of data transmitting/receiving elements mounted on a flexible substrate to the outer surface of an inner hollow cylinder body;

inserting said inner hollow cylinder body into an outer hollow cylinder body such that a predetermined space is formed between the inner surface of said outer hollow cylinder and the outer surface of said inner hollow cylinder body and fixing the peripheral surface of the bottom portion of said inner hollow cylinder body to the inner surface of the outer hollow cylinder body in close contact therewith;

pouring a molten resin into said inner hollow cylinder body;

accommodating said outer hollow cylinder body as a whole in a vacuum container after the pouring of said molten resin;

sucking and removing the air in said inner hollow cylinder body within said vacuum container so that the interior of said inner hollow cylinder body has a negative pressure and introducing said resin in said inner hollow cylinder body to said space between the inner surface of said outer hollow cylinder body and the outer surface of said inner hollow cylinder body through a pouring hole provided on the side surface of said inner hollow cylinder body so as to fill said space with said resin; and

subjecting the thus-obtained product to a predetermined shaping process after said resin has solidified.

15. A method of manufacturing a data carrier apparatus comprising the steps of:

attaching a data carrier composed of a plurality of data transmitting/receiving elements mounted on a flexible substrate to the outer surface of an inner hollow cylinder body;

inserting said inner hollow cylinder body into an outer hollow cylinder body such that a predetermined space is formed between the inner surface of said outer hollow cylinder body and the outer surface of said inner hollow cylinder body and fixing the bottom surface of said inner hollow cylinder body to the inner surface of said outer cylinder body in close contact therewith;

pouring a molten resin into said space through a resin pouring hole provided on said outer hollow cylinder body and removing air in said space from a vent provided on said outer hollow cylinder body; and

subjecting the thus-obtained product to a predetermined shaping process after said resin has solidified.

# F I G . 1

# F I G. 2

# FIG.3

# FIG.4A

34

30a

# FIG.4B

30c

30a

38

32b

35

32

30d

# FIG.4C

30a

36

# FIG.5

32

30

# FIG. 6

# FIG. 7

## F I G.8A

30a

34

## F I G . 8B

30c

35

38

30a

32b

32

30d

## F I G. 8C

37

30a

## FIG. 9A

## FIG. 9B

POURING HOLE

# FIG. 10

## F I G . 11

# F I G. 12